# FASCICULE DE BREVET EUROPEEN

(11) **EP 3 208 528 B1**
(45) Date de publication et mention de la délivrance du brevet: **17.11.2021**
(21) Numéro de dépôt: 17156369.5
(22) Date de dépôt: 15.02.2017
(51) Int. Cl.: B60R 13/00, F21S 41/25, F21S 41/40, F21S 41/50, F21S 43/20, F21S 43/50, H05B 47/115, F21S 43/40, F21S 45/10

(54) **ENSEMBLE LUMINEUX POUR L'ÉCLAIRAGE ET/OU LA SIGNALISATION D'UN VÉHICULE AUTOMOBILE**
LEUCHTEINHEIT ZUR BELEUCHTUNG UND/ODER SIGNALISIERUNG FÜR KRAFTFAHRZEUG
LIGHTING ASSEMBLY FOR LIGHTING AND/OR SIGNALLING OF A MOTOR VEHICLE

(30) Priorité: 18.02.2016 FR 1651304
(43) Date de publication de la demande: 23.08.2017
(73) Titulaire: Valeo Vision, 93012 Bobigny Cedex (FR)
(72) Inventeur: FAOUCHER, Erwan, 49000 Angers (FR); GRATECAP, François, 49070 Beaucouze (FR)
(74) Mandataire: Valeo Visibility

(56) Documents cités:
- EP-A1- 2 957 819
- EP-A2- 2 963 336
- WO-A1-2015/044569
- DE-A1-102004 017 448
- DE-A1-102010 055 332
- US-A1- 2009 257 241

## Description

La présente invention concerne les dispositifs utilisés par les fabricants de véhicules automobiles pour personnaliser ces derniers afin de les rendre facilement distinguables de ceux de la concurrence pour toute personne située à proximité de ces véhicules. Le style et la forme générale d'un véhicule comprennent généralement des éléments permettant à l'utilisateur de reconnaître un modèle spécifique ou un constructeur spécifique. L'invention se rapporte plus particulièrement aux moyens permettant cette personnalisation au travers d'ensembles lumineux pour l'éclairage et/ou la signalisation de ces véhicules.

Parmi les moyens connus de personnalisation d'un véhicule automobile par son fabricant, la présentation d'un élément visuel caractéristique de ce fabricant est le plus utilisé : un logo ou un insigne du fabricant ou du modèle du véhicule est généralement placé à des endroits facilement visibles dudit véhicule, le plus souvent à l'avant et à l'arrière du véhicule, sur les capots et portes correspondants, pour la visibilité depuis l'extérieur, ou au centre du volant, pour la visibilité depuis l'intérieur du véhicule. Il est à noter que si les éléments visuels placés en ces différents points peuvent différer sur un même véhicule (par exemple : insigne du fabricant à l'avant, et insigne du modèle à l'arrière), ils ont en commun de permettre à toute personne passant à proximité du véhicule d'identifier au premier coup d'œil le modèle ou le fabricant de celui-ci, que ce véhicule soit en fonctionnement ou non.

Par ailleurs, pour prendre en compte la demande grandissante d'interactivité par les utilisateurs, certains fabricants proposent des "scénarios d'accueil", c'est-à-dire des cinématiques automatiquement réalisées par le véhicule lorsque son utilisateur arrive à proximité dudit véhicule ou le démarre. Il peut s'agir, à titre d'exemples non exhaustifs, de déverrouillage automatique des portières, de réglage automatique de la position de sièges en fonction de paramètres pré-enregistrés par l'utilisateur, ou de messages vocaux spécifiques pré-enregistrés et personnalisés par l'utilisateur.

La présente invention a pour objet un dispositif combinant les deux points évoqués ci-dessus, et concerne, plus précisément, un ensemble lumineux d'éclairage et/ou de signalisation d'un véhicule qui, au travers d'une cinématique d'accueil dudit véhicule, réalise la personnalisation de celui-ci par la présentation d'un signe visuel caractéristique de son fabricant ou de son modèle.

Il est connu, par exemple par le document EP2340188, d'intégrer un insigne rétro-éclairé dans un élément de l'habitacle du véhicule. Dans le dispositif décrit par ce document, une fenêtre est ménagée dans le couvercle de fermeture d'un coussin de sécurité gonflable de conducteur placé dans le volant, fenêtre qui a la forme générale d'un insigne ou d'un logo du fabricant dudit véhicule. Le logo ou insigne est rapporté sur une surface placée à l'arrière du couvercle de fermeture du coussin de sécurité gonflable de manière à obturer la fenêtre précitée, et une surface électroluminescente est placée à l'arrière de la surface porteuse du logo ou de l'insigne du fabricant, de telle manière que, une fois ladite surface électroluminescente alimentée électriquement, ce logo ou insigne apparaisse rétro-éclairé aux yeux du conducteur placé face au couvercle du coussin de sécurité gonflable. Le document DE 10 2010 055332 A1 divulgue un ensemble lumineux connu de l'art antérieur.

Un tel dispositif nécessite la réalisation de plusieurs éléments distincts de formes complexes : surface porteuse du logo ou de l'insigne (avec prise en compte d'éventuels éléments colorés), surface électroluminescente, dispositif d'alimentation de la surface électroluminescente, chacun de ces éléments devant comporter en outre des moyens coopérant avec au moins un des autres éléments pour permettre l'assemblage et le maintien entre eux desdits éléments. Un tel dispositif nécessite en outre une phase d'assemblage qui peut devenir complexe selon la complexité du logo ou de l'insigne considéré. Enfin, un tel dispositif, par sa conception, s'adresse plutôt à des éléments visuels situés à l'intérieur de l'habitacle du véhicule, protégés de l'extérieur.

La présente invention a pour but de proposer un dispositif de présentation d'un élément visuel caractéristique du fabricant qui soit plus simple, moins coûteux, qui puisse être appliqué à un module d'éclairage et/ou de signalisation du véhicule, et qui ne nécessite pas de phase d'assemblage complexe.

Dans ce but, l'invention a pour objet un ensemble lumineux pour l'éclairage et/ou la signalisation d'un véhicule automobile, qui comprend au moins un module lumineux logeant des moyens d'émission de rayons lumineux en direction de la sortie dudit module, et notamment en direction de moyens de focalisation, de type lentille par exemple. L'ensemble comporte également un masque, dont une partie s'étend au-dessous du module lumineux et desdits moyens de focalisation, en présentant au moins une première surface visible par toute personne passant à proximité du véhicule et au moins une deuxième surface opposée à ladite première surface. Selon l'invention, le masque est réalisé en un matériau diffusant sombre, notamment noir, et un revêtement de matière réfléchissante est déposé sur une partie de la deuxième surface en laissant une portion de cette deuxième surface vierge de revêtement. Des moyens additionnels émetteurs de lumière sont placés en regard de ladite deuxième surface, de manière à ce que les rayons lumineux émis par lesdits moyens additionnels puissent traverser le masque par ladite portion vierge de revêtement.

Avantageusement, la forme de cette portion vierge de revêtement de matière réfléchissante définit, à la surface du masque visible par toute personne passant à proximité du véhicule, la forme d'un signe visuel caractéristique du fabricant ou du modèle du véhicule : par exemple, de manière non limitative, un logo ou un insigne.

Avantageusement, cette portion vierge de revêtement est ménagée dans une zone du masque qui est distincte de la zone de focalisation éventuelle, sur ledit masque, par lesdits moyens de focalisation du module lumineux pour l'éclairage ou la signalisation selon l'invention, de rayons émis par le soleil qui suivraient un chemin inverse de celui d'un faisceau émis par ledit module lumineux.

Selon différents modes de réalisation, l'invention présente également une ou plusieurs des caractéristiques suivantes, prises seules ou en combinaison :
- la matière réfléchissante déposée sur la deuxième face du masque est une couche mince métallique ;
- le masque est réalisé dans un matériau polymère de la famille des polycarbonates ou des polyéthersulfones auquel des additifs appropriés confèrent un aspect "noir diffusant" ;
- un élément transparent, qui peut notamment être coloré, est rapporté, par exemple par collage, sur la deuxième surface du masque, au niveau de la portion vierge de revêtement réfléchissant ;
- les moyens additionnels émetteurs de lumière sont distincts des sources lumineuses utilisées pour l'éclairage ou la signalisation du véhicule ;
- des moyens de commande sont associés auxdits moyens additionnels émetteurs de lumière pour que ceux-ci soient commandés indépendamment des sources lumineuses des projecteurs d'éclairage et/ou de signalisation du véhicule ;
- l'ensemble lumineux comporte des moyens de détection de la présence du conducteur à proximité du véhicule, et ces moyens de commande desdits moyens additionnels agissant selon un ensemble de paramètres pré-définis lorsqu'une information de détection est reçue.

D'autres caractéristiques et avantages de l'invention ressortiront de la description qui suit, illustrée par les figures suivantes :
- la figure 1, qui est une vue schématique de côté d'un ensemble lumineux selon l'invention, avec une partie de masque s'étendant sous un module lumineux ;
- et la figure 2 qui est une vue schématique de face de la partie du masque de la figure 1, lorsque les moyens additionnels émetteurs de lumière sont actifs.

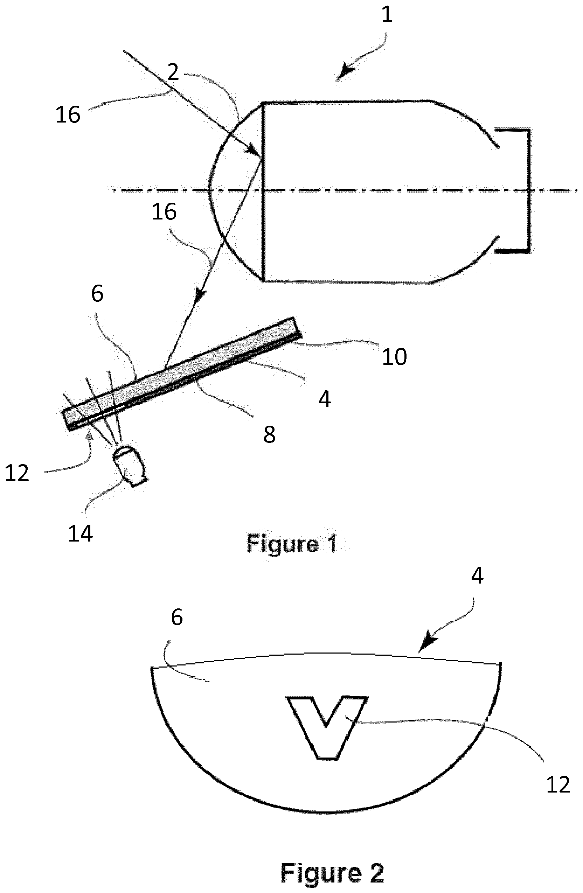

En référence à la figure 1, un ensemble pour l'éclairage et/ou la signalisation d'un véhicule automobile comporte au moins un module lumineux 1 qui inclut, en particulier, une ou plusieurs sources émettrices de lumière (non représentées), des moyens de déviation optique des rayons lumineux, émis par ces sources, en direction de moyens de focalisation 2. De manière courante, lesdits moyens de focalisation 2 peuvent consister en une lentille, mais l'invention s'applique quel que soit le moyen de focalisation retenu et quel que soit le nombre de sources émettrices défini pour l'éclairage ou la signalisation du véhicule.

L'ensemble pour l'éclairage et/ou la signalisation d'un véhicule automobile selon l'invention comporte également un masque 4, schématiquement partiellement représenté en coupe sur la figure 1, au-dessous desdits moyens de focalisation 2, et dont une partie est schématiquement représentée en vue de face par la figure 2.

Ce masque 4 confère à l'ensemble d'éclairage et/ou de signalisation une partie de son esthétique telle que perçue par toute personne passant à proximité dudit véhicule, notamment en dissimulant certains éléments du module lumineux, tels que des éléments de fixation de la ou des sources émettrices de lumière, ou des éléments de fixation des moyens de focalisation 2, par exemple. De forme complexe, le masque 4 est, le plus souvent, réalisé par injection d'un matériau plastique dans un moule approprié, et il comporte au moins une partie qui s'étend sous les moyens de focalisation 2 : c'est plus spécifiquement cette partie du masque 4 qui est schématisée sur la figure 1. Une première surface 6 de cette partie du masque 4 est visible depuis l'extérieur par toute personne passant à proximité du véhicule. Pour des raisons esthétiques, l'aspect visuel du masque 4 est, en général, très sombre, voire noir. Le masque est ainsi réalisé en un matériau diffusant sombre, notamment noir. En l'absence d'éclairage de ce masque, ou si la source de lumière est distante, ce masque peut apparaitre opaque.

La deuxième surface 8 du masque 4, tournée à l'opposé de la première surface vers l'intérieur du module lumineux et donc non visible pour un observateur extérieur du véhicule, est revêtue d'un revêtement 10 d'un matériau réfléchissant la lumière. Ce revêtement participe au rendu opaque du masque depuis l'extérieur du véhicule. Notamment, ce revêtement peut consister en une couche métallique.

Tel que cela est visible sur la figure 1, le revêtement ne recouvre pas intégralement la deuxième surface 8, de sorte que l'on génère une portion de cette deuxième surface qui est une portion 12 vierge de revêtement.

Des moyens additionnels 14 émetteurs de lumière, distincts des moyens d'émission de lumière logés par ailleurs dans le module lumineux pour la réalisation des fonctions d'éclairage et/ou de signalisation de type feux de route, feux de croisement, indicateur de direction ou autre, sont placés derrière le masque, cachés de l'extérieur par ce masque, et il est notable que ces moyens additionnels sont placés au regard de la portion 12 vierge de revêtement.

De la sorte, le revêtement réfléchissant est ajouré pour laisser passage aux rayons lumineux émis par les moyens additionnels à travers le masque, depuis l'intérieur du module vers l'extérieur, les rayons lumineux émis par les moyens additionnels et traversant le masque 4 étant alors visibles depuis l'extérieur par toute personne passant à proximité du véhicule.

Selon un mode de réalisation préféré de l'invention, la forme de la portion vierge de revêtement définit la forme d'un signe visuel caractéristique du fabricant du véhicule. La portion 12 vierge de revêtement peut ainsi, à titre d'exemples non limitatifs, définir, la forme d'un logo ou d'un insigne du fabricant du véhicule, ou la forme d'un emblème du modèle du véhicule considéré.

La portion 12 vierge de revêtement peut être obtenue par plusieurs types de procédé, parmi lesquels un premier qui consiste en un revêtement intégral de la deuxième surface du masque par une couche de matière réfléchissante, puis en une découpe, par exemple une ablation au laser, de cette couche réfléchissante sur la zone que l'on souhaite voir vierge de matière réfléchissante. Un deuxième type de procédé peut consister en l'utilisation d'un film disposé sur la deuxième surface du masque avant métallisation, ledit film étant conformé pour permettre le dépôt de matière réfléchissante sur des portions du masque mais pas sur d'autres.

On comprend que les rayons lumineux issus desdits moyens additionnels 14 sont bloqués par la couche de matière réfléchissante, à l'exception des rayons traversant le masque au niveau de la zone vierge de revêtement, qui eux sont visibles depuis l'extérieur du véhicule. Il s'ensuit que, lorsque les moyens additionnels 14 lumineux émettent de la lumière, seule la portion de la première surface 6 correspondant à la portion vierge de revêtement de la deuxième surface 8 apparaît éclairée aux yeux de toute personne passant à proximité du véhicule, le reste de la première surface 6 conservant, selon un mode de réalisation préféré de l'invention, l'aspect sombre conféré au matériau polymère qui constitue le masque 4 par des additifs appropriés. Ceci est illustré par la figure 2 qui montre schématiquement la vision qu'une personne extérieure, qui passe à proximité du véhicule, a de la première surface 6 du masque lorsque les moyens additionnels sont allumés et que la portion vierge de revêtement présente la forme d'un "V". Lorsque les moyens additionnels émetteurs de lumière 14 sont éteints, la première surface 6 du masque présente un aspect uniforme sombre voir opaque, du fait du matériau diffusant sombre utilisé pour le masque et de la présence d'un revêtement métallisé en arrière de ce matériau diffusant sombre, étant entendu que la portion vierge de revêtement n'est présente que sur une partie minoritaire de la deuxième surface du maque et qu'elle n'est pas distinguée par une personne qui passerait à proximité du véhicule.

Selon différents modes de réalisation de l'invention, non représentés, un élément transparent coloré (non représenté sur les figures) peut être rapporté, par exemple par collage, sur la deuxième surface 8 du masque, au niveau de la portion vierge de revêtement réfléchissant. Si cette opération ajoute une étape d'assemblage et de collage à la réalisation de l'ensemble lumineux selon l'invention, elle permet d'enrichir les possibilités visuelles de présentation du signe caractéristique choisi.

Selon un mode de réalisation préféré de l'invention, la portion vierge de revêtement réfléchissant est ménagée dans une région du masque 4 correspondant à la zone d'impact de certains rayons lumineux 16 issus du soleil et concentrés sur le masque après avoir été réfléchis et focalisés par les moyens de focalisation 2, ces rayons lumineux et les risques de détériorations qu'ils entraînent étant connus des fabricants de projecteurs comme le phénomène dit de « Sunburn ». De la sorte, on permet l'évacuation de ces rayons lumineux et on évite qu'ils créent une surchauffe du masque et une altération de celui-ci.

Selon l'invention, les moyens additionnels 14 émetteurs de lumière sont distincts des sources émettrices de lumière destinées à l'éclairage et/ou à la signalisation du véhicule, et ils sont commandés indépendamment de ces derniers. Plus précisément, les moyens additionnels 14 émetteurs de lumière sont associés à des moyens de commande (non représentés sur les figures) indépendants de ceux qui commandent les éléments lumineux d'éclairage et/ou de signalisation du véhicule.

Avantageusement, par ailleurs, les moyens de commande associés aux moyens additionnels 14 émetteurs de lumière selon l'invention sont commandés selon un ensemble de paramètres prédéfinis lorsque c'est le conducteur du véhicule qui arrive à proximité de celui-ci. Cet ensemble de paramètre prédéfinis permettant notamment la présentation du signe visuel caractéristique du fabricant du véhicule ou du modèle du véhicule devient alors une partie intégrante d'un "scénario d'accueil" du conducteur. Par exemple, et de manière non limitative, les moyens additionnels 14 émetteurs de lumière peuvent être commandés lorsque le conducteur commande le verrouillage ou le déverrouillage d'une ou plusieurs portes du véhicule, la commande desdits moyens additionnels 14 pouvant être alors continue ou définie sur une durée prédéterminée. On comprend que l'ensemble lumineux comporte des moyens de traitement d'une information de détection de la présence du conducteur à proximité du véhicule, et que les moyens de commande desdits moyens additionnels agissent selon un ensemble de paramètres pré-définis lorsqu'une information de détection est reçue.

Il ressort de ce qui précède que l'invention, par des moyens simples, peu coûteux, et pouvant être mis en œuvre sur tous types de véhicules, permet de réaliser, dans le cadre d'un "scénario d'accueil" du conducteur d'un véhicule automobile, la présentation d'un signe visuel caractéristique du fabricant ou du modèle dudit véhicule et, ainsi, permet la personnalisation de ce véhicule et sa distinction vis-à-vis de la concurrence.

## Revendications

1. Ensemble lumineux pour l'éclairage et/ou la signalisation d'un véhicule automobile, comportant au moins un module lumineux logeant des moyens d'émission de rayons lumineux en direction de la sortie dudit module, ainsi qu'un masque (4) dont une partie s'étend au-dessous de moyens de focalisation (2), dans lequel ladite partie dudit masque (4) qui s'étend sous lesdits moyens de focalisation (2) présente au moins une première surface (6) visible par toute personne passant à proximité du véhicule et au moins une deuxième surface (8) opposée à ladite première surface (6), **caractérisé en ce que** le masque (4) est réalisé dans un matériau diffusant sombre et **en ce qu'**un revêtement (10) de matière réfléchissante est déposé sur une partie de la deuxième surface (8) en laissant une portion (12)de cette deuxième surface vierge de revêtement réfléchissant, **et caractérisé en ce que** des moyens additionnels (14) émetteurs de lumière sont placés en regard de ladite deuxième surface (8), de manière à ce que les rayons lumineux émis par lesdits moyens additionnels puissent traverser le masque par ladite portion vierge (12)de revêtement réfléchissant.

2. Ensemble lumineux selon la revendication 1, **caractérisé en ce que** le revêtement (10) de matière réfléchissante déposé sur la deuxième surface (8) du masque est une couche mince métallique.

3. Ensemble lumineux selon la revendication 1 ou 2, **caractérisé en ce que** le masque (4) est réalisé dans un matériau polymère auquel sont ajoutés des additifs permettant d'obtenir un aspect visuel noir dudit masque (4).

4. Ensemble lumineux selon l'une quelconque des revendications 1 à 3, **caractérisé en ce qu'**un élément transparent est rapporté sur la deuxième surface 8 du masque, au niveau de la portion (12) vierge de revêtement réfléchissant.

5. Ensemble lumineux selon l'une quelconque des revendications précédentes, **caractérisé en ce que** ladite portion (12) vierge de revêtement réfléchissant est réalisée dans une région du masque (4) sur laquelle des rayons lumineux (16) issus du soleil peuvent être concentrés après avoir été réfléchis et focalisés par les moyens de focalisation (2) dudit module lumineux.

6. Ensemble lumineux selon l'une quelconque des revendications précédentes, **caractérisé en ce que** lesdits moyens additionnels (14) émetteurs de lumière sont distincts desdits moyens d'émission et de focalisation de rayons lumineux pour l'éclairage et/ou la signalisation du véhicule.

7. Ensemble lumineux selon l'une quelconque des revendications précédentes, **caractérisé en ce qu'**il associe auxdits moyens additionnels (14) émetteurs de lumière des moyens de commande desdits moyens additionnels (14) émetteurs de lumière qui sont indépendants des moyens de commande des moyens d'émission et de focalisation de rayons lumineux pour l'éclairage et/ou la signalisation du véhicule.

8. Ensemble lumineux selon la revendication précédente, **caractérisé en ce qu'**il comporte des moyens de détection de la présence du conducteur à proximité du véhicule, lesdits moyens de commande desdits moyens additionnels (14) agissant selon un ensemble de paramètres pré-définis lorsqu'une information de détection est reçue.

9. Procédé de réalisation d'un masque d'un ensemble lumineux selon l'une quelconque des revendications précédentes, **caractérisé en ce que** ladite portion (12) vierge de revêtement réfléchissant est obtenue par découpe d'un revêtement (10) de matériau réfléchissant préalablement déposé sur la deuxième surface du masque.

10. Procédé selon la revendication précédente, **caractérisé en ce que** ladite découpe est réalisée par ablation laser.

## Patentansprüche

1. Beleuchtungsanordnung für die Beleuchtung und/oder Signalisierung eines Kraftfahrzeugs, mit mindestens einem Leuchtmodul, in dem Mittel zum Aussenden von Lichtstrahlen in Richtung des Ausgangs des Moduls untergebracht sind, sowie einer Maske (4), von der sich ein Teil unterhalb von Fokussiermitteln (2) erstreckt, wobei der Teil der Maske (4), der sich unterhalb der Fokussiermittel (2) erstreckt, mindestens eine erste Fläche (6), die für jede in der Nähe des Fahrzeugs vorbeifahrende Person sichtbar ist, und mindestens eine zweite Fläche (8) aufweist, die der ersten Fläche (6) gegenüberliegt, **dadurch gekennzeichnet, dass** die Maske (4) aus einem dunklen, diffundierenden Material besteht und dass eine Beschichtung (10) aus reflektierendem Material auf einem Teil der zweiten Oberfläche (8) aufgebracht ist, wobei ein Teil (12) dieser zweiten Oberfläche frei von reflektierender Beschichtung bleibt, **und dadurch gekennzeichnet, dass** zusätzliche lichtemittierende Mittel (14) gegenüber der zweiten Oberfläche (8) so angeordnet sind, dass die von den zusätzlichen Mitteln emittierten Lichtstrahlen die Maske über den freien Teil (12) der reflektierenden Beschichtung durchdringen können.

2. Beleuchtungsanordnung nach Anspruch 1, **dadurch gekennzeichnet, dass** die auf der zweiten Oberfläche (8) der Maske aufgebrachte Beschichtung (10) aus reflektierendem Material eine dünne Metallschicht ist.

3. Beleuchtungsanordnung nach Anspruch 1 oder 2, **dadurch gekennzeichnet, dass** die Maske (4) aus einem Polymermaterial hergestellt ist, dem Additive zugesetzt sind, um ein schwarzes Erscheinungsbild der Maske (4) zu erhalten.

4. Beleuchtungsanordnung nach einem der Ansprüche 1 bis 3, **dadurch gekennzeichnet, dass** ein transparentes Element auf der zweiten Oberfläche 8 der Maske in Höhe des Abschnitts (12), der keine reflektierende Beschichtung aufweist, angebracht ist.

5. Beleuchtungsanordnung nach einem der vorhergehenden Ansprüche, **dadurch gekennzeichnet, dass** der Abschnitt (12) ohne reflektierende Beschichtung in einem Bereich der Maske (4) ausgebildet ist, auf den Lichtstrahlen (16) von der Sonne konzentriert werden können, nachdem sie von den Fokussiermitteln (2) des Lichtmoduls reflektiert und fokussiert wurden.

6. Beleuchtungsanordnung nach einem der vorhergehenden Ansprüche, **dadurch gekennzeichnet, dass** die zusätzlichen Lichtemissionsmittel (14) von den Lichtstrahl-Emissions- und Fokussierungsmitteln zur Beleuchtung und/oder Signalisierung des Fahrzeugs getrennt sind.

7. Beleuchtungsanordnung nach einem der vorhergehenden Ansprüche, **dadurch gekennzeichnet, dass** sie mit den zusätzlichen Lichtemissionsmitteln (14) Mittel zur Steuerung der zusätzlichen Lichtemissionsmittel (14) verbindet, die unabhängig von den Mitteln zur Steuerung der Mittel zur Emission und Fokussierung von Lichtstrahlen zur Beleuchtung und/oder Signalisierung des Fahrzeugs sind.

8. Beleuchtungsanordnung nach dem vorhergehenden Anspruch, **dadurch gekennzeichnet, dass** sie Mittel zum Erfassen der Anwesenheit des Fahrers in der Nähe des Fahrzeugs umfasst, wobei die Mittel zum Steuern der zusätzlichen Mittel (14) gemäß einem Satz von vordefinierten Parametern wirken, wenn Erfassungsinformationen empfangen werden.

9. Verfahren zur Herstellung einer Maske einer Beleuchtungsanordnung nach einem der vorhergehenden Ansprüche, **dadurch gekennzeichnet, dass** der Teil (12), der keine reflektierende Beschichtung aufweist, durch Schneiden einer Beschichtung (10) aus reflektierendem Material, die zuvor auf der zweiten Oberfläche der Maske aufgebracht wurde, erhalten wird.

10. Verfahren nach dem vorhergehenden Anspruch, **dadurch gekennzeichnet, dass** das Schneiden durch Laserablation durchgeführt wird.

## Claims

1. Luminous assembly for the lighting and/or signalling of a motor vehicle, comprising at least one luminous module housing means for emitting light rays in the direction of the output of the said module, as well as a bezel (4), part of which extends below focusing means (2), in which the said part of the said bezel (4) which extends below the said focusing means (2) has at least one first surface (6) visible to any person passing in the vicinity of the vehicle and at least one second surface (8) opposite the said first surface (6) **characterized in that** the bezel (4) is made of a dark diffusing material and **in that** a coating (10) of reflecting material is deposited on part of the second surface (8), leaving a portion (12) of this second surface free of reflecting coating, **and characterized in that** additional light-emitting means (14) are placed opposite the said second surface (8) so that the light rays emitted by the said additional means can pass through the bezel via the said portion (12) free of reflecting coating.

2. Luminous assembly according to claim 1, **characterized in that** the coating (10) of reflective material deposited on the second surface (8) of the bezel is a thin metallic layer.

3. Luminous assembly according to claim 1 or 2, **characterized in that** the bezel (4) is made of a polymer material to which additives are added making it possible to obtain a black visual appearance of said bezel (4).

4. Luminous assembly according to any one of claims 1 to 3, **characterized in that** a transparent element is added to the second surface 8 of the bezel, at the level of the portion (12) free of reflective coating.

5. Luminous assembly according to any one of the preceding
claims, **characterized in that** the said portion (12) free of reflective coating is produced in a region of the bezel (4) on which light rays (16) coming from the sun can be concentrated after having been reflected and focused by the focusing means (2) of the said luminous module.

6. Luminous assembly according to any one of the preceding
claims, **characterized in that** said additional light emitting means (14) are distinct from said means for emitting and focusing light rays for lighting and/or signalling the vehicle.

7. Luminous assembly according to any one of the preceding
claims, **characterized in that** it associates with said additional light-emitting means (14) means for controlling said additional light-emitting means (14) which are independent of the means for controlling the means for emitting and focusing light rays for lighting and/or signalling the vehicle.

8. Luminous assembly according to the preceding claim, **characterized in that** it comprises means for detecting the presence of the driver in the vicinity of the vehicle, said means for controlling said additional means (14) acting according to a set of predefined parameters when detection information is received.

9. Method of producing a bezel of a luminous assembly according to any one of the preceding claims, **characterized in that** the said portion (12) which is blank of reflective coating is obtained by cutting a coating (10) of reflective material previously deposited on the second surface of the bezel.

10. Method according to the preceding claim, **characterized in that** said cutting is performed by laser ablation.
